# EUROPEAN PATENT APPLICATION

(11) **EP 1 804 467 A1**
(43) Date of publication of application: **04.07.2007**
(21) Application number: 04792529.2
(22) Date of filing: 18.10.2004
(51) Int. Cl.: H04M 1/00, H04M 1/02

(54) **PORTABLE TERMINAL**

(71) Applicant: MITSUBISHI DENKI KABUSHIKI KAISHA, Chiyoda-ku, Tokyo 100-8310 (JP)
(72) Inventor: TOMIMORI, Takeshi c/o Mitsubishi Denki, Chiyoda-ku, Tokyo 1008310 (JP)
(74) Representative: Popp, Eugen
(86) International application number: PCT/JP2004/015360
(87) International publication number: WO 2006/043303

(57) **Abstract**

This invention relates to a portable terminal such as a portable telephone provided with an LED display panel where a plurality of LEDs are arranged in a matrix on the surface of a case. When an incoming call comes in, a speaker rings a ringtone melody while the LED display panel displays the incoming call. According to this invention, display of high intensity can be obtained from the LEDs. In addition, a control signal in accordance with the ringtone melody is supplied to a control microcomputer that controls the LED display panel, which allows the control microcomputer to perform display control on an image displayed on the LED display panel in synchronization with the ringtone melody.

## Description

### Technical Field

This invention relates to portable terminals such as portable telephones and, more particularly, to a portable terminal that performs display control on light-emitting diodes arranged in a matrix on the surface of a case of the portable terminal.

### Background Art

A portable telephone provided with a display device that notifies incoming call information has been conventionally known, such as one disclosed in a patent document 1. This portable telephone is a folding-type portable telephone, and is provided with a character-display part as an incoming-call-information display part on the back of a display-side case provided with a main display part. When an incoming call comes in, a character having a pattern of telephone is illuminated by light emission from an internally provided LED (light-emitting device) as a backlight, thereby notifying the incoming call.

Patent Document 1: Japanese Patent Application Laid-Open No. 2002-051135

### Disclosure of the Invention

### Problems to be Solved by the Invention

In the conventional technique described in the patent document 1, light emission from the LED is used as backlight. In order for a user to confirm an incoming call from a distance, the character-display part needs to be illuminated with high intensity, which requires high current to flow through the LED. In addition, this technique merely notifies an incoming call without performing display control in synchronization with a ringtone melody notifying the incoming call, failing to provide the user with the enjoyment of display.

### Means for Solving the Problems

A portable terminal according to claim 1 of this invention includes: an LED display panel having a plurality of light-emitting diodes (LEDs) for emitting light to the outside arranged in a matrix in a plane, the LEDs being provided on a surface of a case housing electronic components; a display control device performing display control on the LEDs of the LED display panel based on display data to produce a two-dimensional display image on the LED display panel; and a sound part outputting previously stored sound data to a sound output part to ring the sound output part. The display control part produces the two-dimensional display image on the LED display panel in synchronization with a control signal in accordance with the sound data.

A portable terminal according to claim 2 of this invention includes: an LED display panel having a plurality of light-emitting diodes (LEDs) for emitting light to the outside arranged in a matrix in a plane, the LEDs being provided on a surface of a case housing electronic components; a display control device performing display control on the LEDs of the LED display panel based on display data to produce a two-dimensional display image on the LED display panel; incoming call detecting means; and a sound part notifying an incoming call by outputting previously stored sound data to a sound output part to ring the sound output part upon detection of the incoming call by the incoming call detecting means. The display control part produces the two-dimensional display image on the LED display panel in synchronization with a control signal in accordance with the sound data.

### Effect of the Invention

According to this invention, display is produced on the LED display panel where the plurality of LEDs are arranged in a matrix in a plane, thereby obtaining display of high intensity with low power consumption. Further, the two-dimensional display image is produced on the LED display panel in synchronization with the control signal in accordance with the sound data, which allows display control in synchronization with a ringtone melody and the like of the portable telephone and the like.

### Brief Description of Drawings

Fig. 1 is a perspective diagram of a first preferred embodiment where this invention has been applied to a folding-type portable telephone.
Fig. 2 is a block configuration diagram of the folding-type portable telephone according to the first preferred embodiment of this invention.
Fig. 3 illustrates display examples produced in synchronization with sound data on an LED display panel.

### Explanation of Reference Numerals

1 operation-side case 4 display-side case 8 LED 9 LED display panel 13 baseband IC 14 memory part 15 sound part 15A melody IC 16 speaker 24 control microcomputer 25 X-direction control driver 26 Y-direction control driver

### Best Mode for Carrying Out the Invention

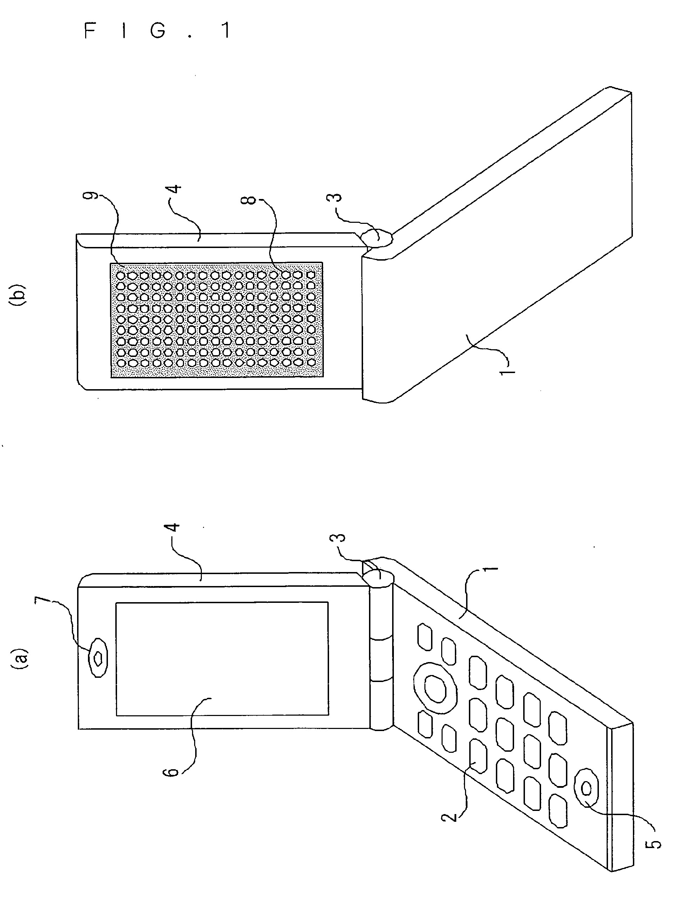

Fig. 1 is a perspective diagram of a first preferred embodiment where this invention has been applied to a folding-type portable telephone. Fig. 1(a) is a perspective diagram viewed from the front side of the folding-type portable telephone when opened, and Fig. 1(b) is a perspective diagram viewed from the rear side.

In the diagrams, "1" denotes an operation-side case that includes an operation part where a plurality of operation keys 2 are arranged, with one end side being coupled to one end of a display-side case 4 via a hinge 3. A microphone 5 to be used for telephone conversation by a user is provided on the other end side of the operation-side case 1. A main display part 6 for displaying characters and images is provided on the front side of the display-side case 4, as shown in Fig. 1A. The main display part 6 is a liquid crystal display device (LCD). A receiver 7 for outputting voice of the party at the other end of the line is provided on the other end side of the display-side case 4. Additionally, as shown in Fig. 1(b), an LED display panel 9 where a plurality of light-emitting diodes (LEDs) 8 are arranged in a matrix is provided on the rear side of the display-side case 4. The LED display panel 9 is inserted in a display window formed on the rear of the display-side case 4, and includes the LEDs 8 arranged with n rows by m columns. In this case, 153 LEDs 8 with 17 rows and 9 columns are arranged. The LEDs 8 are mounted with a 3.2-mm pitch, and the dimensions of a display portion of the LED display panel 9 are about 2.4 inches (53.9 mm × 28.3 mm). This means the LED display panel 9 occupies almost the entire area on the rear of the display-side case 4, which allows display of high intensity to be produced on a relatively large screen.

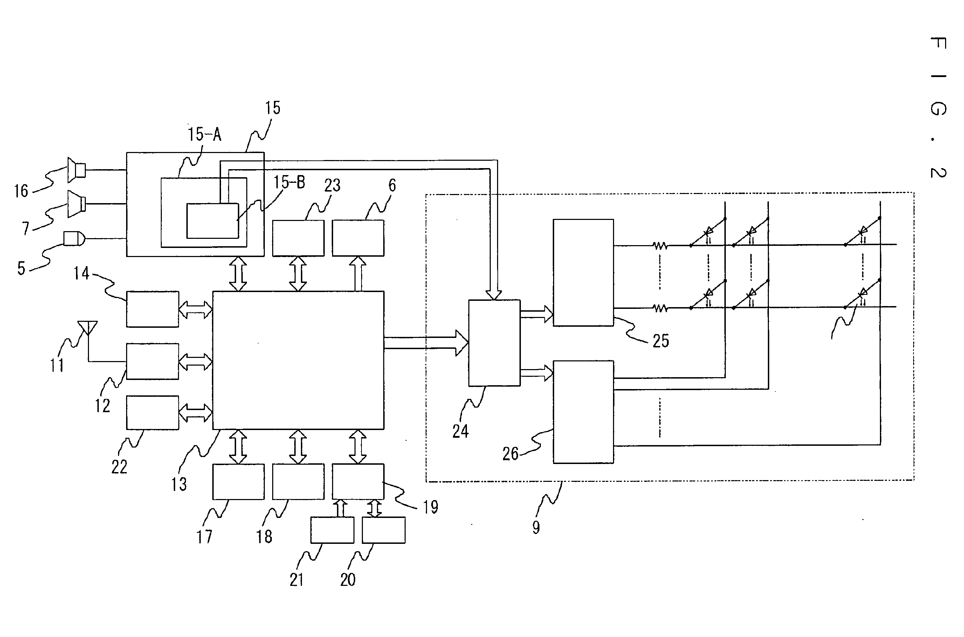

Fig. 2 is a block configuration diagram of the folding-type portable telephone according to the first preferred embodiment. In the diagram, "11" denotes an antenna for radio communications which receives a radio wave from the party at the other end of the line and inputs the radio wave to a radio part 12. The radio part 12 amplifies and converts the frequency of the inputted signal, and inputs the signal to a baseband IC 13. The baseband IC 13 as a main control device controls the whole of the portable telephone, and operates in accordance with a program stored in a memory part 14. The memory part 14 stores the program for operating the baseband IC 13, and also various kinds of data as well as data processed by the baseband IC 13.

When an incoming call comes in, the baseband IC 13 rings a speaker 16 via a sound part 15 to notify the user of the incoming call and, if the user answers the incoming call, connects a terminal of the party at the other end of the line and the line to allow telephone conversation with the microphone 5 and the receiver 7. The user's voice is taken in the portable telephone via the microphone 5, to be transmitted via the sound part 15, the baseband IC 13, the radio part 12, and the antenna 11.

"17" denotes the operation part that includes the operation keys 2. "18" denotes an RTC (real time clock) that outputs accurate time information. A power source control part 19 supplies each part with power generated by a battery 20, while charging the battery 20 by supplying the battery 20 with power inputted from a charging terminal 21. The battery 20 is housed in the operation-side case 1. "22" denotes infrared communications means for short-distance data communications, and "23" denotes a camera (not shown in Fig. 1) included in the portable telephone.

"9" denotes the LED display panel that includes a control microcomputer 24, an X-direction control driver 25, a Y-direction control driver 26, and the LEDs 8 arranged in a matrix with 17 rows and 9 columns. The control microcomputer 24, the X-direction control driver 25 and the Y-direction control driver 26 function as a display control device that performs display control on the LEDs 8.

The portable equipment according to this invention has the LEDs 8 arranged in a matrix on the surface of the portable equipment case, thus obtaining display of high intensity with low power consumption.
"15A" denotes a melody IC that stores data of a plurality of ringtone melodies, and reads data of a ringtone melody having been selected and set from the plurality of ringtone melodies by the user at the time of an incoming call, to output the data to the speaker 16. "15B" denotes an LED-synchronization-signal derivation part that generates a control signal in accordance with the ringtone melody outputted from the melody IC 15A, and supplies the control signal to the control microcomputer 24. Display data stored in the memory part 14 is inputted to the control microcomputer 24 via the baseband IC 13. The control microcomputer 24 inputs the display data to the X-direction control driver 25 and the Y-direction control driver 26 in synchronization with the control signal supplied from the LED-synchronization-signal derivation part 15B. Namely, when an incoming call comes in, the speaker 16 rings a ringtone melody while the LED display panel 9 displays a two-dimensional display image in synchronization with the ringtone melody.

Means of displaying the two-dimensional display image on the LED display panel 9 in synchronization with the ringtone melody will be described in detail.

The melody IC 15A of the sound part 15 stores data of a plurality of ringtone melodies, the data of each ringtone melody including scale data and melody data by instrument such as guitar, bass, and drum. The LED-synchronization-signal derivation part 15B generates an on/off signal in accordance with a drum melody, for example, and supplies the on/off signal to the control microcomputer 24. The control microcomputer 24 synchronizes the display data inputted via the baseband IC 13 with the on/off signal, to supply image data for a single frame to the X-direction control driver 25 and the Y-direction control driver 26 every time an on signal is supplied, for example. As a result, the LED display panel 9 can display an image advanced frame by frame in synchronization with the ringtone melody.

The display data is stored in the memory part 14. Conceivable means of transmitting the image data from the control microcomputer 24 to the X-direction control driver 25 and the Y-direction control driver 26 may include a method of inputting the image data for a single frame from the memory part 14 via the baseband IC 13 every time an on signal is inputted, to transmit the image data to the X-direction driver 25 and the Y-direction driver 26, and a method of storing all image data stored in the memory part 14 in a memory of the control microcomputer 24 via the baseband IC 13, to read and transmit the image data for a single frame stored in the memory to the X-direction control driver 25 and the Y-direction control driver 26 every time an on signal is inputted. Either method is applicable to the present invention. The former method will eliminate the need to provide the control microcomputer 24 with the memory, and the latter method will reduce the processing carried out by the baseband IC 13 which carries out the incoming call processing.

As alternative means, the on/off signal outputted from the LED-synchronization-signal derivation part 15B may be supplied to the baseband IC 13, so that the baseband IC 13 inputs the image data for a single frame from the memory part 14 to the control microcomputer 24 in synchronization with the on/off signal.

Although an image is advanced frame by frame in synchronization with an on/off signal in accordance with melody data of a ringtone melody in the preferred embodiment described above, the frame-by-frame advance is applicable to not just a ringtone melody but during playback of another music. Still alternatively, the frame-by-frame advance may be in synchronization with not just music but the presence or absence of voice or a voice level during telephone conversation with the portable telephone. When displaying image data in synchronization with music and the like, various kinds of synchronized displays can be produced by varying image intensity, or scaling the image up and down, for example, other than synchronizing frame advance.

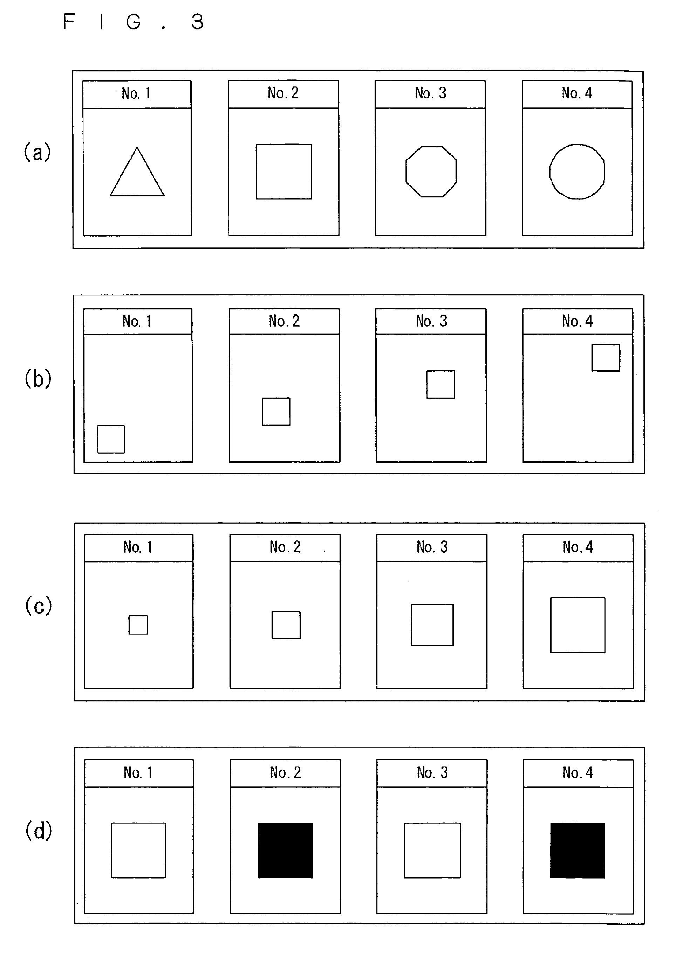

Fig. 3 illustrates display examples produced in synchronization with sound data on the LED display panel 9, taking four-frame images as examples. In Fig. 3(a), the image of a pattern displayed on the LED display panel 9 varies in synchronization with sound data, with a triangular pattern as a first screen, a rectangular pattern as a second screen, a hexagonal pattern as a third screen, and a circular pattern as a fourth screen. In Fig. 3(b), a rectangular pattern moves from the lower left to the upper right of the screen with sequential change from a first screen through a fourth screen. In Fig. 3(c), a rectangular pattern increases in size with sequential change from a first screen through a fourth screen. In Fig. 3(d), a color displaying a pattern changes with a change in screen.

As has been described, various display examples are conceivable that are produced in synchronization with sound data on the LED display panel 9. Display can be selected and set appropriately depending on preferences of the user.
While the invention has been shown and described in detail, the foregoing description is in all aspects illustrative and not restrictive. It is therefore understood that numerous modifications and variations can be devised without departing from the scope of the invention.

### Industrial Applicability

This invention offers convenience when applied to a portable telephone and the like that notifies a user of an incoming call by sound and screen display.

## Claims

1. A portable terminal comprising:
an LED display panel having a plurality of light-emitting diodes (LEDs) for emitting light to the outside arranged in a matrix in a plane, said LEDs being provided on a surface of a case housing electronic components;
a display control device performing display control on said LEDs of said LED display panel based on display data to produce a two-dimensional display image on said LED display panel; and
a sound part outputting previously stored sound data to a sound output part to ring said sound output part, wherein
said display control part produces said two-dimensional display image on said LED display panel in synchronization with a control signal in accordance with said sound data.

2. A portable terminal comprising:
an LED display panel having a plurality of light-emitting diodes (LEDs) for emitting light to the outside arranged in a matrix in a plane, said LEDs being provided on a surface of a case housing electronic components;
a display control device performing display control on said LEDs of said LED display panel based on display data to produce a two-dimensional display image on said LED display panel;
incoming call detecting means for detecting an incoming call; and
a sound part notifying an incoming call by outputting previously stored sound data to a sound output part to ring said sound output part upon detection of said incoming call by said incoming call detecting means, wherein
said display control part produces said two-dimensional display image on said LED display panel in synchronization with a control signal in accordance with said sound data.

3. The portable terminal according to claim 1 or 2, wherein
said sound data is music data, and
said display control part produces said two-dimensional display image on said LED display panel in synchronization with a control signal in accordance with said music data.

4. The portable terminal according to claim 1 or 2, wherein
said display control part produces said two-dimensional display image on said LED display panel in synchronization with a ringing level of said sound data.
